Europäisches Patentamt

European Patent Office

Office européen des brevets

(11) Numéro de publication: **0 001 726**
**A1**

## (12) DEMANDE DE BREVET EUROPEEN

(21) Numéro de dépôt: **78400100.0**

(22) Date de dépôt: **15.09.78**

(51) Int. Cl.²: **B 29 D 27/00**
**B 29 C 25/00**

(30) Priorité: **19.10.77 FR 7731405**

(43) Date de publication de la demande:
**02.05.79 Bulletin 79/9**

(84) Etats contractants désignés:
**BE CH DE GB LU NL SE**

(71) Demandeur: **ISOBOX-BARBIER S.A.**

**F-29114 Bannalec(FR)**

(72) Inventeur: **Soulier, Joël**
**Boîte Postale 32**
**F-27540 Ivry La Bataille(FR)**

(74) Mandataire: **Ores, Irène**
**CABINET ORES 6, Avenue de Messine**
**F-75008 - Paris(FR)**

(54) **Procédé et installation pour la stabilisation d'objets en matières plastiques expansées et objets obtenus.**

(57) La présente invention est relative à un procédé et à une installation pour la stabilisation d'objets en matières plastiques expansées.

On soumet les objets 2 à l'action simultanée d'un rayonnement ultra haute-fréquence et d'un courant d'air rapide de refroidissement en légère dépression. L'installation est caractérisée par la combinaison d'une cavité résonnante 3 avec une source d'énergie U.H.F., un circuit de circulation d'air (entrée 7, sortie 6), une pompe d'extraction 5 et un dispositif d'amenée des objets dans la cavité résonnante.

Application à la fabrication et à la stabilisation d'objets en matières plastiques expansées.

Fig.1

EP 0 001 726 A1

TITRE MODIFIÉ
voir page de garde

BREVET D'INVENTION
-------------------

<u>Société dite</u> : ISOBOX-BARBIER S.A.

<u>Invention</u> :   Monsieur Joël SOULIER

PROCEDE ET INSTALLATION POUR LA STABILISATION
-------------------------------------------------

.D'OBJETS EN MATIERES PLASTIQUES EXPANSEES
-------------------------------------------

La priorité conventionnelle suivante est revendiquée :

- Demande de Brevet en FRANCE
  N°77 31405
  du 19 OCTOBRE 1977

O
O O

La présente invention est relative à un nouveau procédé pour la stabilisation d'objets (tels que panneaux, plaques, palettes, feuilles, etc...,en particulier), en matière plastique expansée.

Nombreux sont les procédés de fabrication de matières plastiques expansées qui utilisent outre un agent de gonflement, de la vapeur d'eau comme fluide caloporteur pour humecter les particules de résines, avant de les soumettre notamment à un rayonnement haute-fréquence. Tous ces procédés présentent toutefois un inconvénient majeur : la vapeur d'eau qui intervient au cours du cycle d'expansion des résines, se condense en partie au sein même de la mousse, où elle reste emprisonnée.

Comme conséquences immédiates de cet état de choses, il y a lieu de noter la dégradation des propriétés d'isolation (thermique ou acoustique) de ces résines expansées,et surtout le grave inconvénient que constitue le fait que la mousse qui contient ce liquide emprisonné continue de "travailler", ce qui a pour conséquence que sa structure dimensionnelle se modifie en fonction du temps.

Comme il est capital pour l'industrie de l'emballage ou de la oonstruction (comme pour beaucoup d'autres usages d'ailleurs) de disposer d'un matériau fixé dans ses dimensions et ne nécessitant pas d'usinage et de rectification ultérieurs, il est donc indispensable de stabiliser la résine expansée obtenue. Encore faut-il que l'élimination du liquide emprisonné ne grève pas trop le prix de revient de la production des polymères expansés. Le procédé d'élimination du liquide emprisonné (et notamment de l'eau) couramment utilisé jusqu'ici, est le séchage à l'air. Comme le polymère expansé est un isolant thermique et comme, d'autre part, la température de l'air de séchage ne peut être trop élevée sous peine de provoquer une post-expansion de la résine, il s'ensuit que le séchage à l'air tiède ou froid demande souvent 24 heures ou plus, sans que l'on ait la certitude absolue de stabiliser définitivement le polymère expansé.

De même, le traitement d'objets en matière plastique expansée, par le rayonnement électromagnétique, en vue de leur stabilisation, aboutit également à la déformation de leurs parois extérieures, due à la post-expansion qui résulte de l'action sur la surface des objets traités, de la vapeur du liquide polaire qui s'échappe desdits objets. Ce procédé ne peut résoudre d'une façon satisfaisante le problème posé par la présence de liquide polaire emprisonné dans la matière plastique à la suite du processus d'expansion auquel elle est soumise, sauf si l'on palliait l'inconvénient majeur qu'il entraîne, à l'aide d'une installation très coûteuse d'un dispositif qui viendrait comprimer les parois des objets soumis au traitement par le rayonnement électromagnétique.

La présente invention s'est, en conséquence, donné pour but de pourvoir à un procédé et à une installation pour la stabilisation d'objets en matière plastique expansée, qui répondent mieux aux nécessités de la pratique que les procédés antérieurement connus, notamment en ce que le procédé conforme à la présente invention fournit des objets parfaitement stabilisés, ne subissant ni de post-expansion, ni de retrait avec le temps, ne nécessitant aucune installation coûteuse et en ce que l'opération de stabilisation ne dure que quelques dizaines de secondes au lieu de 24 heures et plus, comme dans l'Art antérieur.

La présente invention a pour objet un procédé de stabilisation d'objets en polymères expansés, caractérisé en ce que l'on soumet lesdits objets à l'action simultanée d'un rayonnement ultra haute-fréquence (U.H.F.) et d'un courant d'air rapide de refroidissement en légère dépression.

Suivant un mode de réalisation avantageux du procédé conforme à la présente invention, la température de l'air de refroidissement est comprise entre 40° et 50°C.

Cette marge relativement étroite de température se comprend aisément. En effet, à des températures supérieures à 50°C, et notamment à partir de 60°C, on assiste à un début de post-expansion, (qui entraîne une déformation des objets traités) et à des températures inférieures à 40°C, il se produit une condensation, tout-à-fait indésirable, de la vapeur d'eau (ou d'un autre liquide polaire).

Suivant un autre mode de réalisation avantageux du procédé conforme à la présente invention, la pression de l'air de séchage est comprise entre 0,5 et 0,8 atmosphère.

La présente invention a également pour objet une installation pour la stabilisation d'objets en polymères expansés, caractérisée par la combinaison d'une cavité résonnante avec une source d'énergie électromagnétique ultra haute-fréquence (U.H.F.), un circuit de circulation d'air, une pompe d'extraction d'air et de la vapeur dégagée et un dispositif d'introduction des objets en polymères expansés, dans la cavité résonnante.

Suivant un mode de réalisation avantageux de l'installation objet de la présente invention, le circuit de circulation d'air est agencé longitudinalement par rapport à la cavité résonnante.

Suivant un autre mode de réalisation de l'installation conforme à l'invention, le circuit de circulation d'air est agencé transversalement par rapport à la cavité résonnante.

Suivant un autre mode de réalisation de l'installation conforme à l'invention, des moyens de chauffage modéré de l'air sont associés au circuit de circulation d'air.

Outre les dispositions qui précèdent, l'invention comprend encore d'autres dispositions, caractéristiques et avantages, qui ressortiront de la description qui va suivre.

La présente invention vise plus particulièrement le procédé et l'installation de stabilisation d'objets en matières plastiques expansées, conformes aux dispositions qui précèdent, ainsi que les moyens propres à la mise en oeuvre de ces procédés et à la réalisation de ces installations, et les procédés d'ensemble ainsi que les chaînes de fabrication dans lesquels sont inclus les procédés, les installations et les dispositifs conformes à la présente invention, de même que les objets en polymères expansés obtenus à l'aide du procédé et de l'installation conformes à l'invention.

L'invention pourra être mieux comprise à l'aide du complément de description qui va suivre, qui se réfère au dessin annexé dans lequel :

- la Figure 1 est une représentantion schématique d'une installation conforme à la présente invention, et

- la Figure 2 représente, à titre comparatif, les courbes des variations de dimensions d'objets séchés par les méthodes classiques et par le procédé conforme à la présente invention.

Il doit être bien entendu, toutefois, que l'installation décrite et représentée dans le dessin annexé, est donnée uniquement à titre d'illustration de l'objet de l'invention, mais n'en constitue en aucune manière une limitation.

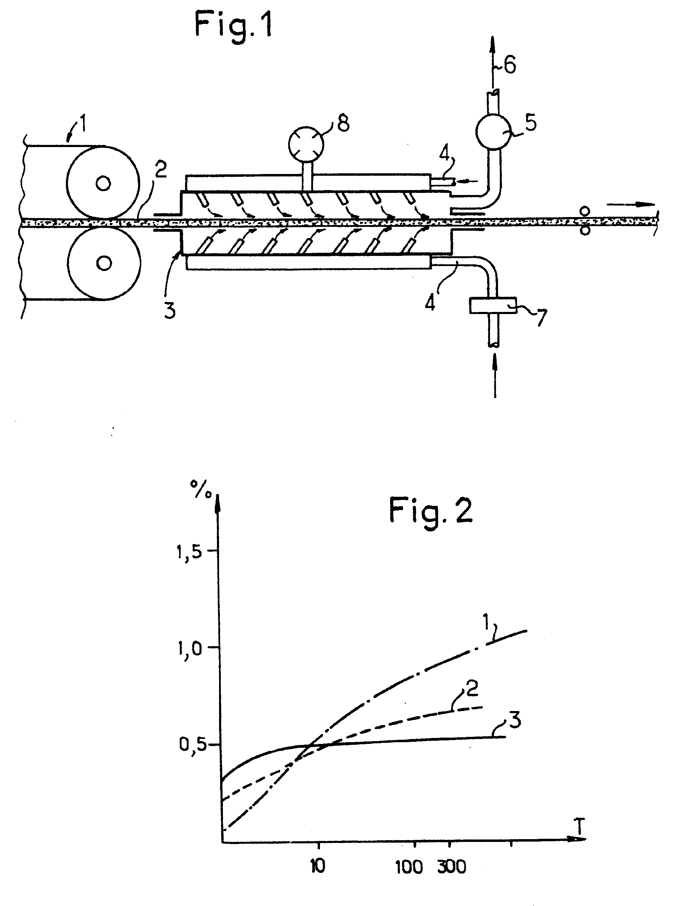

L'installation conforme à la présente invention, dans laquelle est réalisée l'opération de stabilisation d'objets en matière plastique expansée, représentée schématiquement à la Figure 1, se compose d'une cavité résonnante 3, de 6 m de long, par exemple, reliée à un magnétron 8 (d'une puissance de 35 kg par exemple) ; dans cette cavité circule l'air préchauffé à 45°C par la batterie chauffante 7 et introduit par les conduites 4.

L'objet 2 qui sort des machines de fabrication à raison de 700 kg/heure par exemple (exprimés en produit fin sec), est amené dans la cavité résonnante 3 par une double chenille 1 qui fait avancer l'objet 2, tel que panneau en polystyrène expansé (PSE), à sa sortie des chaînes de fabrication.

L'air et la vapeur du liquide polaire sont évacués par aspiration vers la sortie 6 par la pompe 5 dont le débit est, par exemple, de 900 $m^3$/h et dont la pression statique est de 3000 mm d'eau par exemple. La chaleur de vaporisation créée par l'absorption des ondes ultra haute-fréquence par l'eau emprisonnée, élève sensiblement la température de l'objet et favorise la tendance à la post-expansion, mais comme la surface de l'objet est balayée continuellement par l'air et est donc beaucoup plus froide, il y a formation d'une sorte de "croûte" dont la résistance mécanique est suffisante pour empêcher toute expansion.

Le panneau 2 séché en PSE ainsi obtenu est parfaitement stabilisé : la plus grande variation d'une dimension quelconque qui est observée est inférieure à 0,5 %.

La Figure 2 fait ressortir de manière très significative les différences de stabilisation des polymères expansés, selon le mode de séchage auquel ces polymères sont soumis. Les trois courbes représentées à la Figure 2 représentent les variations des dimensions d'un panneau en PSE en % (en ordonnée) des cotes primitives, en fonction du temps (en heures). La courbe 1 correspond à la convection naturelle, la courbe 2 correspond au séchage à l'air chaud et la courbe 3 correspond au procédé conforme à la présente invention, quelques dizaines de secondes suffisant, dans ce dernier cas, pour obtenir une stabilisation parfaite.

Le Tableau I ci-après compare, pour la fabrication de 100 m$^3$ par heure d'un même polymère expansé (à savoir PSE), le temps de stabilisation de l'objet expansé obtenu, ainsi que la surface occupée au sol par l'installation nécessaire à la fabrication :

TABLEAU I

|  | séchage à l'air libre | séchage à l'air chaud | procédé conforme à l'invention |
|---|---|---|---|
| Temps de stabilisation | 240 h | 24 h | 40" |
| Surface occupée au sol | 2000 m$^2$ | 500 m$^2$ | 6 m$^2$ |
| Possibilité de séchage en continu | NON | NON | OUI |

Comme indiqué dans ce Tableau, deux autres avantages, et non des moindres, que présentent le procédé et l'installation conformes à l'invention, résident dans la réduction considérable de la surface occupée au sol, pour une même production, ainsi que dans la possibilité, très intéressante du point de vue économique, de séchage des polymères expansés en continu.

Ainsi que cela ressort de ce qui précède, l'invention ne se limite nullement à ceux de ses modes de mise en oeuvre, de réalisation et d'application qui viennent d'être décrits de façon plus explicite ; elle en embrasse, au contraire, toutes les variantes qui peuvent venir à l'esprit du technicient en la matière, sans s'écarter du cadre, ni de la portée, de la présente invention.

REVENDICATIONS

1°. Procédé de stabilisation d'objets en polymères expansés, caractérisé en ce que l'on soumet lesdits objets à l'action simultanée d'un rayonnement ultra haute-fréquence (U.H.F.) et d'un courant d'air rapide de refroidissement en légère dépression.

2°. Procédé selon la Revendication 1, caractérisé en ce que la température de l'air de refroidissement est comprise entre 40° et 50°C.

3°. Procédé selon l'une quelconque des Revendications 1 et 2, caractérisé en ce que la pression de l'air de séchage est comprise entre 0,5 et 0,8 atmosphère.

4°. Installation pour la stabilisation d'objets en polymères expansés, caractérisée par la combinaison d'une cavité résonnante avec une source d'énergie électromagnétique ultra haute-fréquence (U.H.F.), un circuit de circulation d'air, une pompe d'extraction d'air et de la vapeur dégagée et un dispositif d'amenée des objets en polymères expansés dans la cavité résonnante.

5°. Installation selon la Revendication 4, caractérisée en ce que le circuit de circulation d'air est agencé longitudinalement par rapport à la cavité résonnante.

6°. Installation selon la Revendication 4, caractérisée en ce que le circuit de circulation d'air est agencé transversalement par rapport à la cavité résonnante.

7°. Installation selon l'une quelconque des Revendications 4 à 6, caractérisée en ce que des moyens de chauffage modéré de l'air de refroidissement sont associés au circuit de circulation d'air.

8°. Objets en polymères expansés, caractérisés en ce qu'ils sont obtenus en mettant en oeuvre le procédé selon l'une quelconque des Revendications 1 à 3, dans une installation selon l'une quelconque des Revendications 4 à 7.

Fig.1

Fig. 2

**RAPPORT DE RECHERCHE EUROPEENNE**

Numéro de la demande

EP 78 40 0100

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendication concernée | |
| A | FR - A - 2 180 301 (KANEBO)<br>* Revendications 1 et 11 * | 1 | B 29 D 27/00<br>B 29 C 25/00 |
| | --- | | |
| A | FR - A - 2 014 790 (HOLE et BIRCH)<br>* Revendications 1,2,4,7 * | 1 | |
| | ---- | | |

**DOMAINES TECHNIQUES RECHERCHES (Int. Cl.²)**

B 29 D 27/00
B 29 C 25/00
C 08 J  7/00

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-01-1979 | SCHMIDL |

OEB Form 1503.1  06.78